# EUROPEAN PATENT APPLICATION

(11) **EP 4 257 853 A1**
(43) Date of publication of application: **11.10.2023**
(21) Application number: 22305442.0
(22) Date of filing: 04.04.2022
(51) Int. Cl.: F16K 1/22, F16K 1/226

(54) **VALVE FOR FLUID APPLICATIONS**

(71) Applicant: MANN+HUMMEL GmbH, 71636 Ludwigsburg (DE)
(72) Inventor: NOISEAU, Pascal, 53410 SAINT OUEN DES TOITS (FR)
(74) Representative: Mann + Hummel Intellectual Property

(57) **Abstract**

A valve (100) for fluid applications, at least comprising a valve body (10), a flap (30) arranged in a duct part (16) for a rotational movement about a pivot axis (32) relative to a valve seat (22). The pivot axis (32) has a first offset (71) from a center line (24) of the valve seat (22) and has a second offset (72) from a center line (26) of the bore (18). The sealing surface (36) of the flap (30) takes the form of a truncated cone (38), wherein a notional apex (40) of the truncated cone (38) is located on a mid-plane (42) of the bore (18) perpendicular to the pivot axis (32) and has a third offset (73) from the center line (26) of the bore (18), wherein the notional apex (40) is on the same side of the center line (26) as the pivot axis (32).

## Description

### Technical Field

The invention relates to a valve for fluid applications with at least one inlet port and at least one outlet port, in particular a valve for fuel cell systems.

### Prior Art

GB 2516094 A discloses a valve comprising a valve member supported for angular movement relative to a valve seat about a pivot axis, the valve member having a peripheral edge defining a sealing surface and a sealing line. The sealing line lies upon a national sphere. The pivot axis is parallel to and offset from a plane of the valve member and offset from a diameter of the valve seat in a first direction. The valve seat takes the form of a truncated cone of circular cross-section. The notional apex of the truncated cone is eccentric to the seat. A notional line passing through the apex and extending parallel to the axis of the seat is offset from the axis of the seat in the said first direction, wherein a first part of the truncated cone is tangential to the notional sphere, and a second part of the truncated cone is not tangential to the notional sphere.

WO 99/02901 discloses a rotating adjusting valve whereof the seamless steel shutterbase ensures in closed position perfect tightness of the fluid between upstream and downstream. The valve body assembly mainly consists of a body, a rotating shaft, two bearings a fixed solid and circular conical base and a circular shutter with double offset wedged on the rotating axle. The two main mechanical parts ensuring tightness, i.e. the shutter, a mobile rotating part, and the base, a fixed part whereon the shutter rests have a circular sealing line, said line called base circle, the bearing part sealing the shutter and the base is geometrically defined by a right angle truncated cone with a circular base.

### Disclosure of the Invention

It is an object of the invention to provide an improved valve for fluid applications with low leakage and low friction.

According to an aspect of the invention the object is achieved by a valve for fluid applications with at least one inlet port and at least one outlet port, at least comprising a valve body, a duct attached to the valve body with a bore being enclosed by the at least one inlet port and the at least one outlet port, a flap arranged in the duct for a rotational movement about a pivot axis relative to a valve seat, the flap having a peripheral edge defining a sealing surface, the sealing surface sealing in a closed position the duct against a contact surface of the valve seat, wherein the pivot axis has a first offset from a center line of the valve seat and having a second offset from a center line of the bore,
wherein the sealing surface of the flap takes the form of a truncated cone, wherein a notional apex of the truncated cone is located on a mid-plane of the bore perpendicular to the pivot axis and has a third offset from the center line of the bore, wherein the notional apex is on the same side of the center line as the pivot axis.

Advantageous embodiments are described in the dependent claims, the description and the drawings.

A valve for fluid applications with at least one inlet port and at least one outlet port is proposed, at least comprising a valve body, a duct attached to the valve body with a bore being enclosed by the at least one inlet port and the at least one outlet port, a flap arranged in the duct for a rotational movement about a pivot axis relative to a valve seat, the flap having a peripheral edge defining a sealing surface, the sealing surface sealing in a closed position the duct against a contact surface of the valve seat. The pivot axis has a first offset from a center line of the valve seat and having a second offset from a center line of the bore. The sealing surface of the flap takes the form of a truncated cone, wherein a notional apex of the truncated cone is located on a mid-plane of the bore perpendicular to the pivot axis and has a third offset from the center line of the bore, wherein the notional apex is on the same side of the center line as the pivot axis.

The proposed valve exhibits a low leakage and low friction behavior in operational mode. This is of particular advantage for fuel cell system applications where the fuel cell stack needs a very low leakage valve at a closed position for flow control.

The valve comprises at least one flap, a driving shaft and a valve seat for flap tightness, at least a valve body comprising all necessary components to drive the flap, as the driving shaft, a gear, a sector, a motor, necessary sensors, a return spring and the like. The pivot axis has offsets from the center line of the valve seat and from the center line of the bore of the valve duct. The flap sealing area exhibits a conical shape. The cone axis is not perpendicular to the flap axis.

According to a favorable embodiment of the valve, the valve seat may have a circular shape. The global shape of the valve seat is fully circular as a result of a revolution sweep. Thus, there is no need for an orientation index for a valve seat installation into the valve. The shape of the flap, thus, may not be a truncated cone, but a result of a tangent draft from the valve seat, being circular and torus shaped. An orientation for a flap installation will be advantageously given by the driving shaft. The tightness of the valve may advantageously be ensured by this way.

Furthermore, the circular shape valve seat may be easy to produce, independently from material or manufacturing process. Additionally the circular shape fits to a usual circular inner shape of duct pipes.

According to a favorable embodiment of the valve, the valve seat may comprise a gasket with an at least partly torus shaped contact surface. The valve seat advantageously may be torus shaped. Alternatively the valve seat may exhibit any shape in order to favor a linear or a narrow surface contact between the cone shape of the flap and the torus of the valve seat, to obtain better tightness, despite a shape tolerance on both valve seat and flap.

Furthermore, imposing a linear contact between the flap and the valve seat may favor a bigger allowance for a shape default versus tightness. Therefore, favorably, a torus shaped valve seat may be applied.

According to a favorable embodiment of the valve, the valve seat may comprise a gasket comprising the contact surface wherein the gasket may provide a tangential contact to the truncated cone shaped sealing surface of the flap. The flap shape, thus, may not be a truncated cone, but a result of a tangent draft from the valve seat, being circular and torus shaped. An orientation for a flap installation will be advantageously given by the driving shaft. The tightness of the valve may be advantageously be ensured by this way.

Furthermore, imposing a rotation tangency angle at each point ensures a homogeneous contact pressure on the gasket in a closed position of the valve. Thus, advantageously, only the flap shape may be fine-tuned.

According to a favorable embodiment of the valve, the third offset may be arranged between the notional apex of the truncated cone and the center line of the bore may be larger than half a diameter of the valve seat. Thus, the proposed valve advantageously exhibits low friction when operating the flap and ensures a tightness when the valve is in the closed position.

According to a favorable embodiment of the valve, the valve seat may be fabricated by at least one of the processes machining, molding, sintering, forming. Additionally or alternatively the gasket may be fabricated by at least one of the materials rubber, PTFE, composite assembly of raw material, overmolding. The proposed valve advantageously allows for a simpler mold design and set-up, ensuring a cost effective manufacturing and an easy valve assembly.

According to a favorable embodiment of the valve, an assembly of a driving shaft into the flap and/or an assembly of the driving shaft into the valve body and/or an assembly of the valve seat into the valve body may be performed by a floating seat manner. Thus, a self-best-fitting process of the flap into the valve seat may be favored.

According to a favorable embodiment of the valve, the floating seat manner may be achieved by a flexible material, in particular by at least one of the materials rubber, soft polymer, plastics, by a spring or by a respective clearance in the assembly. By these materials or by these components, respectively, a self-best-fitting process of the flap into the valve seat may be favored.

According to a favorable embodiment of the valve, the duct may comprise at least a first duct part and a second duct part, wherein the first duct part is attached to the valve body. In particular the first duct part may be integral with the valve body, and the second duct part is attached to the first duct part. Advantageously, the second duct part as an interface may easily be changed to suit a customer need.

Furthermore, the first duct part supports the kinematic chain as is the actuator interface, shaft bearing housing, and the like, whereas the second duct part only closes the valve, and can easily be adapted to a customer specific interface as e.g. a spigot, a flange, an integrated interface from a fuel cell stack, or the like. This also ease assembly of the valve seat into the valve.

According to a favorable embodiment of the valve, the valve seat with the gasket may be arranged at an interface between the first duct part and the second duct part. Thus, an internal tightness of the flap to the valve seat as well as an external tightness between the two duct parts advantageously may be achieved by one single gasket in the valve seat.

According to a favorable embodiment of the valve, the gasket may be arranged for sealing the first duct part to the second duct part as well as for sealing the flap to the duct.

Furthermore, sealing between those two duct parts of the valve is made by the valve seat, that integrates a separate dual sealing function: the internal sealing between the flap and the valve seat, between upstream / downstream fluid currents, and the external sealing between the internal volume of the valve to an outside of the valve.

According to a favorable embodiment of the valve, the gasket may comprise a reinforcement part and/or by layered sealing.

Furthermore, the separate dual sealing function advantageously may be achieved by any kind of sealing construction, e.g. rubber or polymer, overmolded on a metallic or plastic frame, layered sealing, or a combination of them.

### Brief Description of the Drawings

The present invention together with the above-mentioned and other objects and advantages may best be understood from the following detailed description of the embodiments, but not restricted to the embodiments, wherein is shown in:
- Figure 1: a valve for fluid applications with at least one inlet port and at least one outlet port according to an embodiment of the invention in an isometric view;
- Figure 2: the valve according to Figure 1 in a front view with intersecting planes A-A and B-B;
- Figure 3: the valve according to Figure 1 in a side view with an intersecting plane D-D;
- Figure 4: the valve in the intersecting plane B-B according to Figure 2;
- Figure 5: the valve in the intersecting plane A-A according to Figure 2;
- Figure 6: the valve in the intersecting plane D-D according to Figure 3 in a closed position;
- Figure 7: the valve in the intersecting plane D-D according to Figure 3 in an open position;
- Figure 8: a detailed intersection view of a gasket according to an embodiment of the invention;
- Figure 9: a detailed intersection view of a gasket according to a further embodiment of the invention; and
- Figure 10: a detailed intersection view of a gasket according to a further embodiment of the invention.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

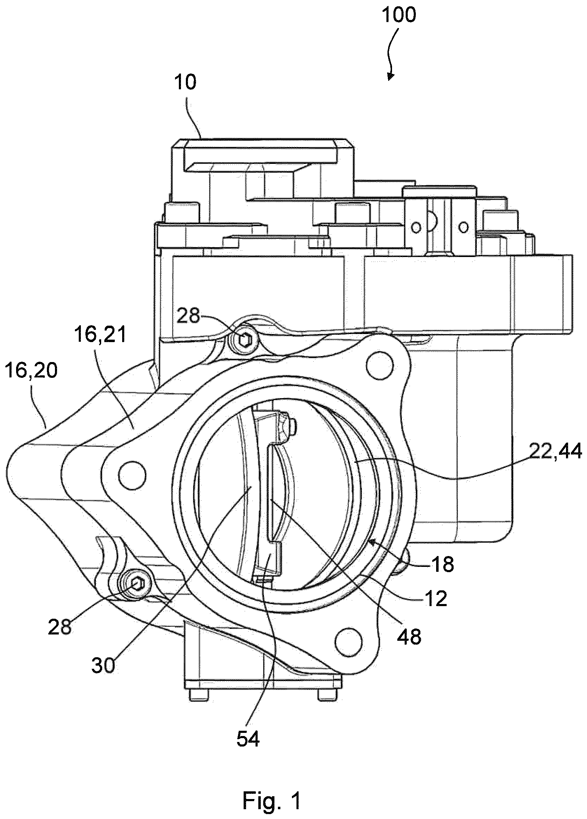

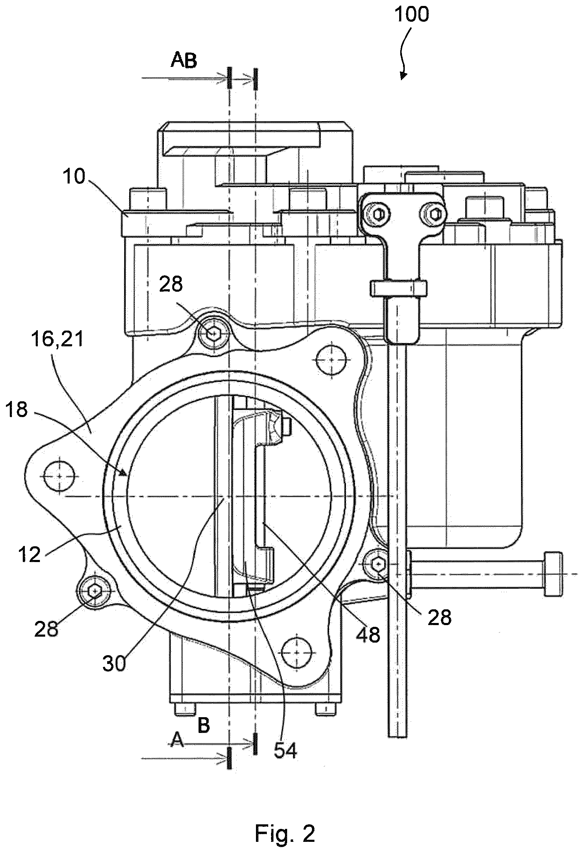

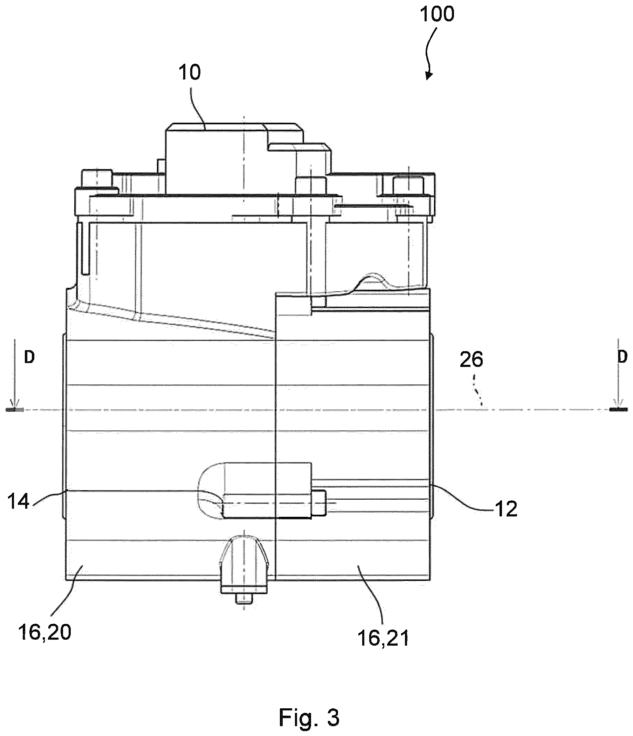

Figure 1 depicts a valve 100 for fluid applications with at least one inlet port 12 and at least one outlet port 14 according to an embodiment of the invention in an isometric view. Figure 2 shows the valve 100 according to Figure 1 in a front view with intersecting planes A-A and B-B, whereas in Figure 3 the valve 100 in a side view with an intersecting plane D-D is depicted.

The valve 100 comprises a valve body 10 and a duct 16 attached to the valve body 10 with a bore 18 being enclosed by the at least one inlet port 12 and the at least one outlet port 14. The duct 16 comprises a first duct part 20 and a second duct part 21. The first duct part 20 is attached to the valve body 10. In particular the first duct part 20 may be integral with the valve body 10. The second duct part 21 is attached to the first duct part 20 and fixed with screws 28.

In Figure 1 and Figure 2 a flap 30 is to be seen which is arranged in the duct 16 for a rotational movement in order to open or close the duct 16. In the Figures the flap 30 is in an open position. The flap 30 is mounted with a shaft mounting 54 to a driving shaft 48 for driving the rotational movement of the flap 30. Components for driving the driving shaft 48 as motor, sensors, bearings are located in the valve body 10 and are standard components according to state of the art.

The first duct part 20 supports the kinematic chain as is the actuator interface, shaft bearing housing, and the like, whereas the second duct part 21 only closes the valve 100, and can easily be adapted to a customer specific interface as e.g. a spigot, a flange, an integrated interface from a fuel cell stack, or the like. This also ease assembly of the valve seat 22 into the valve 100.

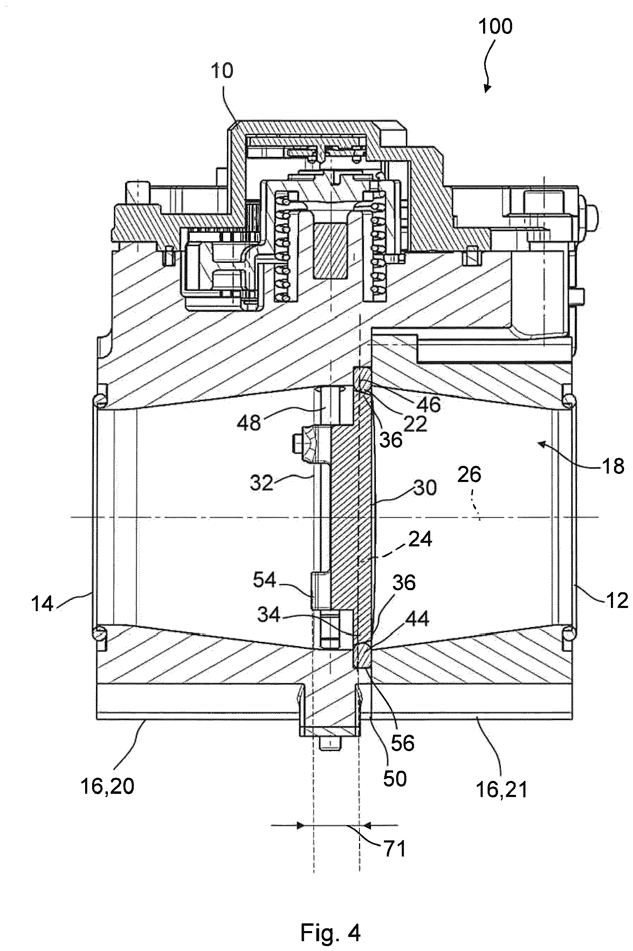

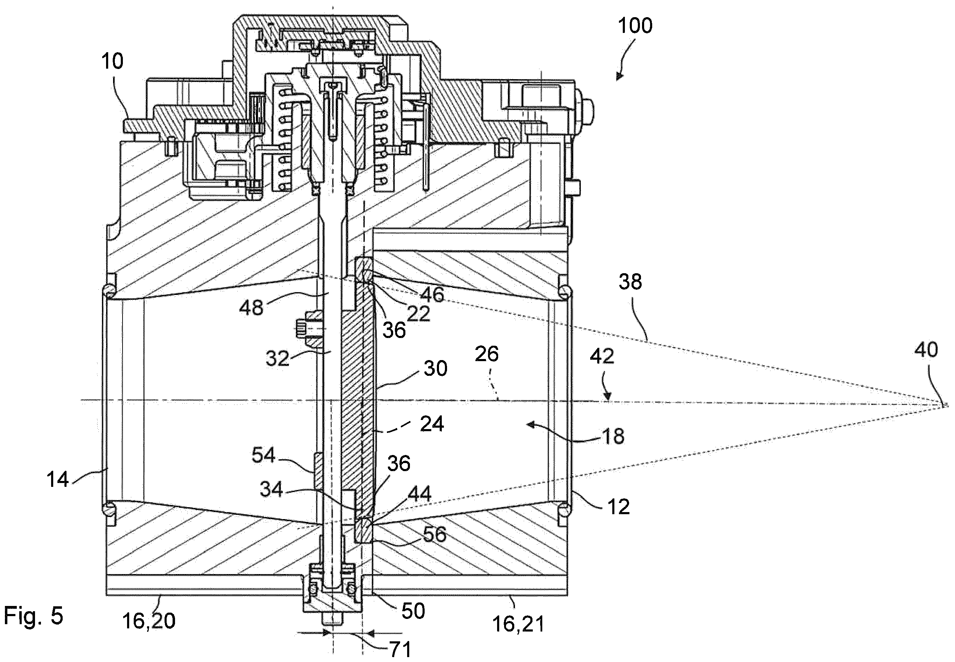

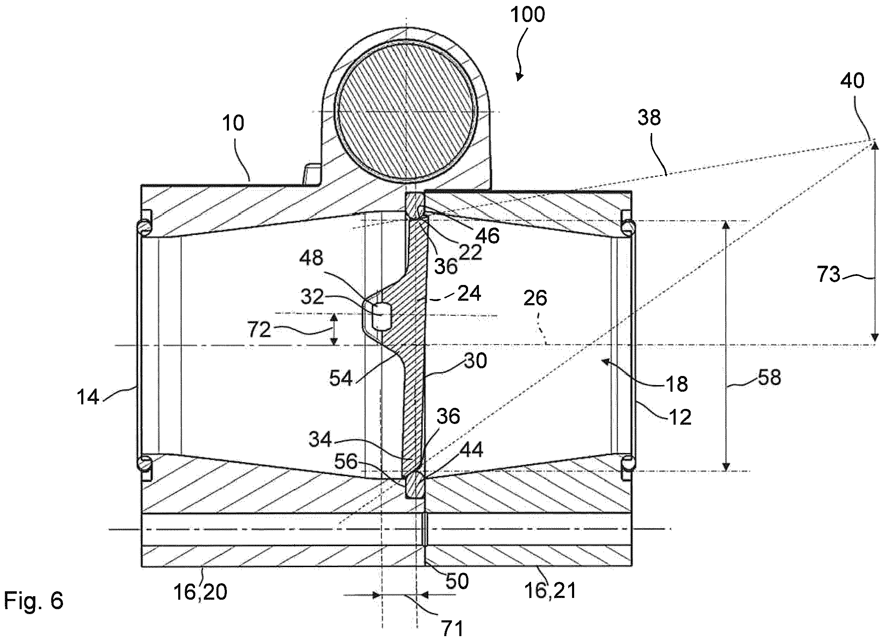

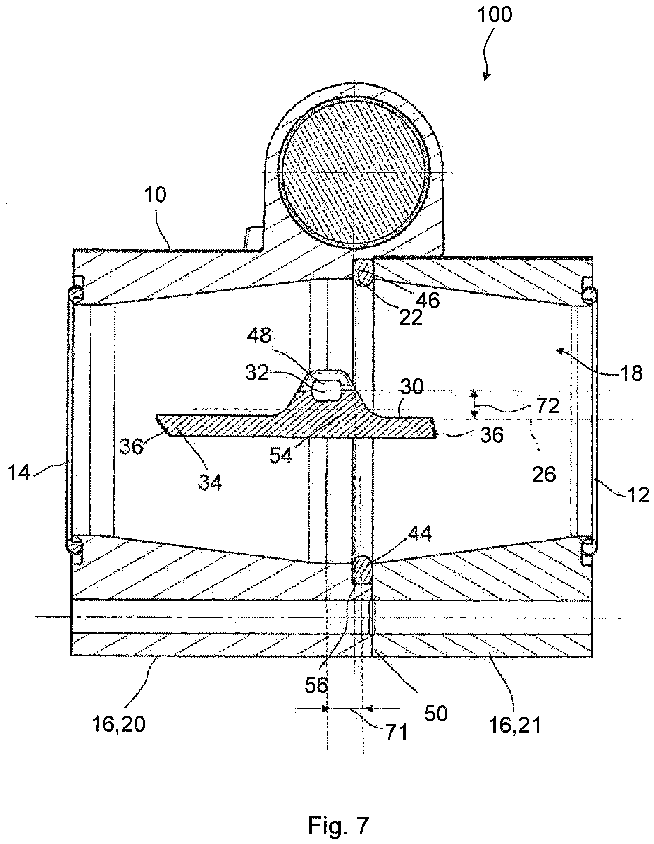

Figure 4 depicts the valve 100 in the intersecting plane B-B according to Figure 2, whereas in Figure 5 the valve 100 is depicted in the slightly laterally shifted intersecting plane A-A according to Figure 2. The valve 100 is shown in a closed position. In Figure 6 the valve 100 is depicted in the intersecting plane D-D according to Figure 3 also in a closed position, whereas in Figure 7 the valve 100 is shown in the same intersecting plane D-D in an open position.

As may be seen from the Figures, the flap 30 is arranged in the duct 16 for the rotational movement about a pivot axis 32 relative to a valve seat 22. The flap 30 has a peripheral edge 34 defining a sealing surface 36. The sealing surface 36 seals in a closed position the duct 16 against a contact surface 46 of the valve seat 22.

The valve seat 22 has a circular shape with respect to a center line 26 of the duct 16 and comprises a gasket 44 with an at least partly torus shaped contact surface 46.

As in particular may be seen from Figure 6 the pivot axis 32 has a first offset 71 from a center line 24 of the valve seat 22 and has a second offset 72 from a center line 26 of the bore 18.

The sealing surface 36 of the flap 30 takes the form of a truncated cone 38. The cone 38 is sketched in Figures 5 and 6. A notional apex 40 of the truncated cone 38 is located on a mid-plane 42 of the bore 18 perpendicular to the pivot axis 32 and has a third offset 73 from the center line 26 of the bore 18. The notional apex 40 is on the same side of the center line 26 as the pivot axis 32.

Thus, there is no need for an orientation index for a valve seat installation into the valve 100. The shape of the flap 30, thus, may not be a truncated cone, but a result of a tangent draft from the valve seat 22, being circular and torus shaped. An orientation for a flap installation will be advantageously given by the driving shaft 48. The tightness of the valve 100 may advantageously be ensured by this way.

Advantageously, the valve seat 22 is torus shaped. Alternatively, the valve seat 22 may exhibit any shape in order to favor a linear or a narrow surface contact between the cone shape of the flap 30 and the valve seat 22, to obtain better tightness, despite a shape tolerance on both valve seat 22 and flap 30.

Furthermore, imposing a linear contact between the flap 30 and the valve seat 22 may favor a bigger allowance for a shape default versus tightness. Therefore, favorably, a torus shaped valve seat 22 may be applied.

For the embodiment shown in the Figures the third offset 73 being arranged between the notional apex 40 of the truncated cone 38 and the center line 26 of the bore 18 is larger than half a diameter 58 of the valve seat 22.

Thus the sealing surfaces 36 of the flap 30 take a form which is in particular suited for a low friction behavior of the flap 30 when being closed or opened. Also a low leakage of the flap 30 in a closed position may be guaranteed by this arrangement.

In a further embodiment, the valve seat 22 may comprise a gasket 44 comprising the contact surface 46 wherein the gasket 44 provides a tangential contact to the truncated cone shaped sealing surface 36 of the flap 30.

The valve seat 22 may advantageously be fabricated by at least one of the processes machining, molding, sintering, forming. The gasket 44 may favorably be fabricated by at least one of the materials rubber, PTFE, composite assembly of raw material, overmolding. The proposed valve 100 advantageously allows for a simpler mold design and set-up, ensuring a cost effective manufacturing and an easy valve assembly.

An assembly of a driving shaft 48 into the flap 30 and/or an assembly of the driving shaft 48 into the valve body 10 and/or an assembly of the valve seat 22 into the valve body 10 may be performed by a floating seat manner. The floating seat manner may be achieved by a flexible material, in particular by at least one of the materials rubber, soft polymer, plastics, spring or by a respective clearance in the assembly. By these materials or by these components, respectively, a self-best-fitting process of the flap 30 into the valve seat 22 may be favored.

As may be seen from the intersection views of the Figures 4 to 7 the valve seat 22 with the gasket 44 is arranged at an interface 50 between the first duct part 20 and the second duct part 21. Thus, the gasket is arranged for sealing the first duct part 20 to the second duct part 21 as well as for sealing the flap 30 to the duct 16.

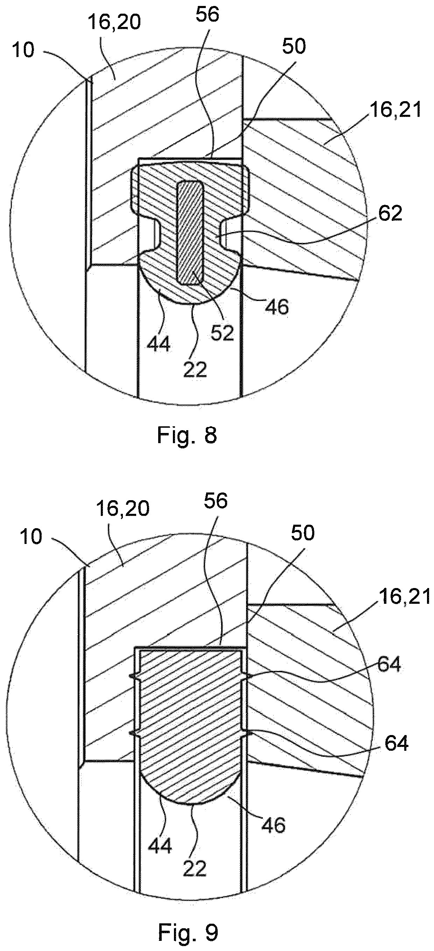

In the Figures 8 to 10 different embodiments of a gasket 44 are shown.

Figure 8 depicts a detailed intersection view of a gasket 44 according to an embodiment of the invention.

The gasket 44 is placed in a groove 56 at the interface 50 of the first duct part 20 and the second duct part 21. The gasket 44 comprises a reinforcement part 52 and exhibits a constriction 62. The gasket 44 exhibits a torus shaped sealing surface 46. An internal tightness of the flap 30 to the valve seat 22 as well as an external tightness between the two duct parts 20, 21 advantageously may be achieved by one single gasket 44 in the valve seat 22.

Thus, sealing between those two duct parts 20, 21 of the valve 100 is made by the valve seat 22, that integrates a separate dual sealing function: the internal sealing between the flap 30 and the valve seat 22, between upstream / downstream fluid currents, and the external sealing between the internal volume of the valve 100 to an outside of the valve 100.

In Figure 9 a detailed intersection view of a gasket 44 according to a further embodiment of the invention is depicted. This gasket 44 exhibits a block shaped form with a torus shaped sealing surface 46. The gasket 44 is fixed in the groove 56 with adhesion parts 64 on each side of the gasket 44.

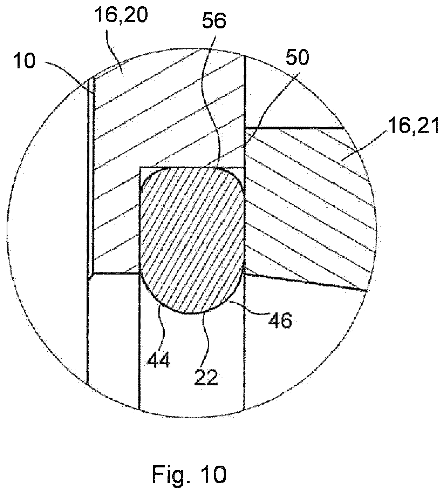

Figure 10 depicts a detailed intersection view of a gasket 44 according to a further embodiment of the invention. This gasket 44 is O-ring shaped and pressed in the groove 56 for fixing. Thus a torus shaped sealing surface 46 may also be achieved.

### Reference numerals

- 10: valve body
- 12: inlet port
- 14: outlet port
- 16: duct
- 18: bore
- 20: first duct part
- 21: second duct part
- 22: valve seat
- 24: center line
- 26: center line
- 28: screw
- 30: flap
- 32: pivot axis
- 34: peripheral edge
- 36: sealing surface
- 38: cone
- 40: apex
- 42: mid-plane
- 44: gasket
- 46: contact surface
- 48: driving shaft
- 50: interface
- 52: reinforcement part
- 54: shaft mounting
- 56: groove
- 58: diameter valve seat
- 62: constriction
- 64: adhesion part
- 71: offset pivot axis from center line valve seat
- 72: offset pivot axis from center line bore
- 73: offset apex from center line bore
- 100: valve

## Claims

1. A valve (100) for fluid applications with at least one inlet port (12) and at least one outlet port (14), at least comprising
- a valve body (10),
- a duct (16) attached to the valve body (10) with a bore (18) being enclosed by the at least one inlet port (12) and the at least one outlet port (14),
- a flap (30) arranged in the duct (16) for a rotational movement about a pivot axis (32) relative to a valve seat (22), the flap (30) having a peripheral edge (34) defining a sealing surface (36), the sealing surface (36) sealing in a closed position the duct (16) against a contact surface (46) of the valve seat (22),
wherein the pivot axis (32) has a first offset (71) from a center line (24) of the valve seat (22) and having a second offset (72) from a center line (26) of the bore (18), wherein the sealing surface (36) of the flap (30) takes the form of a truncated cone (38),
wherein a notional apex (40) of the truncated cone (38) is located on a mid-plane (42) of the bore (18) perpendicular to the pivot axis (32) and has a third offset (73) from the center line (26) of the bore (18), wherein the notional apex (40) is on the same side of the center line (26) as the pivot axis (32).

2. The valve according to claim 1, wherein the valve seat (22) has a circular shape.

3. The valve according to claim 1 or 2, wherein the valve seat (22) comprises a gasket (44) with an at least partly torus shaped contact surface (46).

4. The valve according to any one of the preceding claims, wherein the valve seat (22) comprises a gasket (44) comprising the contact surface (46) wherein the gasket (44) provides a tangential contact to the truncated cone shaped sealing surface (36) of the flap (30).

5. The valve according to any one of the preceding claims, wherein the third offset (73) being arranged between the notional apex (40) of the truncated cone (38) and the center line (26) of the bore (18) is larger than half a diameter (58) of the valve seat (22).

6. The valve according to any one of the preceding claims, wherein the valve seat (22) is fabricated by at least one of the processes machining, molding, sintering, forming and/or wherein the gasket (44) is fabricated by at least one of the materials rubber, PTFE, composite assembly of raw material, overmolding.

7. The valve according to any one of the preceding claims, wherein an assembly of a driving shaft (48) into the flap (30) and/or an assembly of the driving shaft (48) into the valve body (10) and/or an assembly of the valve seat (22) into the valve body (10) is performed by a floating seat manner.

8. The valve according to claim 7, wherein the floating seat manner is achieved by a flexible material, in particular by at least one of the materials rubber, soft polymer, plastics, spring or by a respective clearance in the assembly.

9. The valve according to any one of the preceding claims, wherein the duct (16) comprises at least a first duct part (20) and a second duct part (21), wherein the first duct part (20) is attached to the valve body (10), in particular wherein the first duct part (20) is integral with the valve body (10), and the second duct part (21) is attached to the first duct part (20).

10. The valve according to claim 9, wherein the valve seat (22) with the gasket (44) is arranged at an interface (50) between the first duct part (20) and the second duct part (21).

11. The valve according to claim 10, wherein the gasket is arranged for sealing the first duct part (20) to the second duct part (21) as well as for sealing the flap (30) to the duct (16).

12. The valve according to any one of the claims 3 to 11, wherein the gasket (44) comprises a reinforcement part (52) and/or by layered sealing.
